(19) Europäisches Patentamt
European Patent Office
Office européen des brevets

(11) **EP 2 311 178 B1**

(12) **EUROPÄISCHE PATENTSCHRIFT**

(45) Veröffentlichungstag und Bekanntmachung des Hinweises auf die Patenterteilung:
**22.04.2020   Patentblatt 2020/17**

(21) Anmeldenummer: **09779470.5**

(22) Anmeldetag: **14.05.2009**

(51) Int Cl.:
**H02M 7/49** *(2007.01)*      *H02M 7/483* *(2007.01)*

(86) Internationale Anmeldenummer:
**PCT/EP2009/055808**

(87) Internationale Veröffentlichungsnummer:
**WO 2010/015430 (11.02.2010 Gazette 2010/06)**

(54) **REDUNDANZSTEUERVERFAHREN EINES MEHRPHASIGEN STROMRICHTERS MIT VERTEILTEN ENERGIESPEICHERN**

REDUNDANT CONTROL METHOD FOR A MULTIPHASE CONVERTER HAVING DISTRIBUTED ENERGY STORES

PROCEDE DE COMMANDE REDONDANTE D'UN CONVERTISSEUR DE COURANT POLYPHASE A ACCUMULATEURS D'ENERGIE REPARTIS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **07.08.2008   DE 102008036811**

(43) Veröffentlichungstag der Anmeldung:
**20.04.2011   Patentblatt 2011/16**

(73) Patentinhaber: **Siemens Aktiengesellschaft
80333 München (DE)**

(72) Erfinder:
• HILLER, Marc
  **91207 Lauf an der Pegnitz (DE)**
• KRUG, Dietmar
  **90459 Nürnberg (DE)**

(56) Entgegenhaltungen:
**WO-A-2007/033852      DE-A1- 10 103 031
US-A1- 2006 279 249**

**Beschreibung**

Die Erfindung bezieht sich auf ein Verfahren zur Steuerung eines Stromrichters mit verteilten Energiespeichern nach dem unabhängigen Anspruch 1.

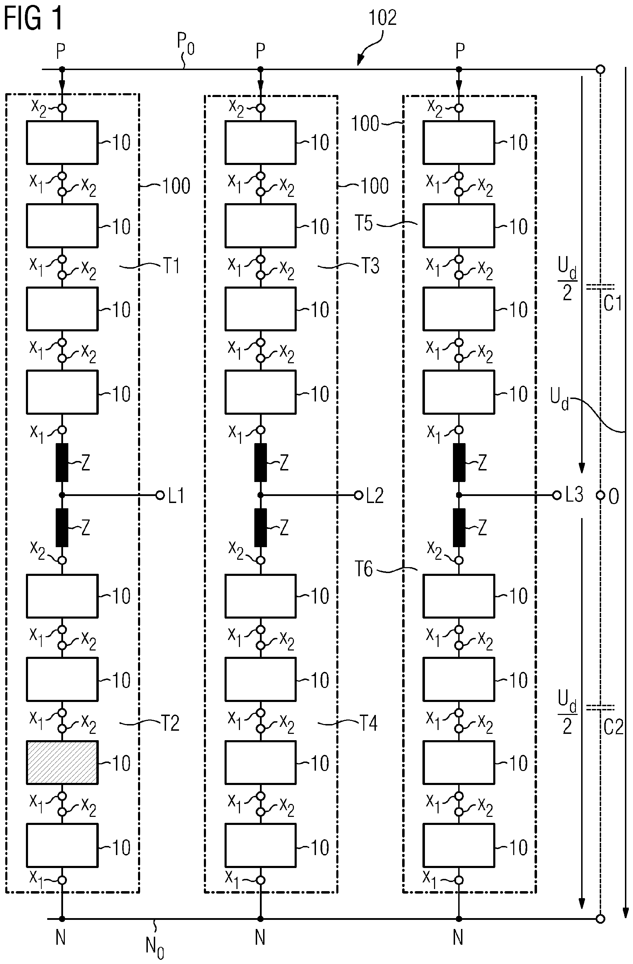

Aus der DE 101 03 031 A1 ist ein Stromrichter mit verteilten Energiespeichern bekannt. Ein Ersatzschaltbild eines derartigen Stromrichters ist in der Figur 1 näher dargestellt. Gemäß diesem Ersatzschaltbild weist dieser bekannte Stromrichter, der mit 102 bezeichnet ist, drei Phasenmodule auf, die jeweils mit 100 bezeichnet sind. Diese Phasenmodule 100 sind gleichspannungsseitig jeweils mit einer positiven und einer negativen Gleichspannungs-Sammelschiene $P_0$ und $N_0$ elektrisch leitend verbunden. Zwischen diesen beiden Gleichspannungs-Sammelschienen $P_0$ und $N_0$ wäre bei einem Spannungszwischenkreis-Umrichter eine Reihenschaltung zweier Kondensatoren C1 und C2 geschaltet, an denen eine Gleichspannung $U_d$ abfällt. Ein Verbindungspunkt dieser beiden elektrisch in Reihe geschalteten Kondensatoren C1 und C2 bilden einen virtuellen Mittelpunkt O. Jedes Phasenmodul 100, das einen Brückenzweig des mehrphasigen Stromrichters bildet, weist einen oberen und einen unteren Teilbrückenzweig auf, die, da die Teilbrückenzweige jeweils ein Stromrichterventil des mehrphasigen Stromrichters mit verteilten Energiespeichern darstellen, im Folgenden als Ventilzweig T1 bzw. T3 bzw. T5 und T2 bzw. T4 bzw. T6 bezeichnet werden. Jeder dieser Ventilzweige T1 bis T6 weist eine Anzahl von elektrisch in Reihe geschalteten zweipoligen Subsystemen 10 auf. In diesem Ersatzschaltbild des Stromrichters 102 weist jeder Ventilzweig T1, ..., T6 vier zweipolige Submodule 10 auf. Die Anzahl der Subsysteme 10 pro Ventilzweig T1, ..., T6 ist jedoch nicht auf diese dargestellte Anzahl beschränkt. Jeder Verknüpfungspunkt zweier Ventilzweige T1 und T2 bzw. T3 und T4 bzw. T5 und T6 eines Phasenmoduls 100 bildet einen wechselspannungsseitigen Anschluss L1 bzw. L2 bzw. L3 eines Phasenmoduls 100. Da in dieser Darstellung der Stromrichter 102 drei Phasenmodule 100 aufweist, kann an deren wechselspannungsseitigen Anschlüssen L1, L2 und L3, die auch als Lastanschlüsse bezeichnet werden, eine dreiphasige Last, beispielsweise ein Drehstrommotor, angeschlossen werden.

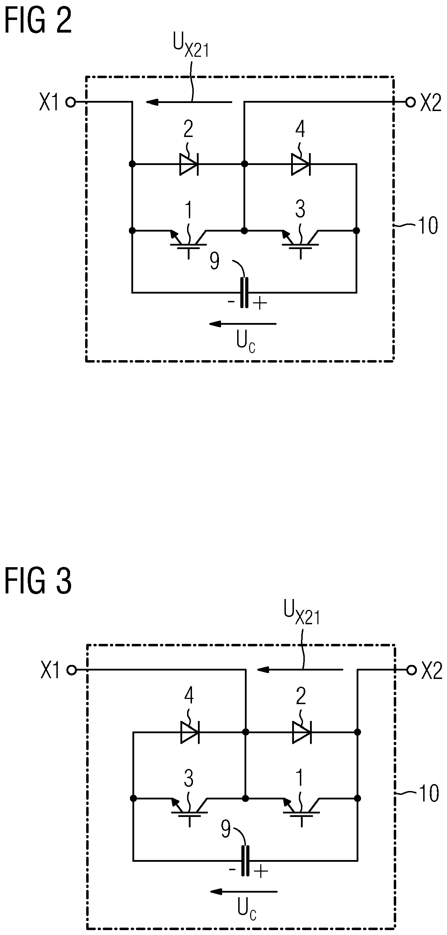

In der Figur 2 ist ein Ersatzschaltbild einer bekannten Ausführungsform eines zweipoligen Subsystems 10 näher dargestellt. Die Schaltungsanordnung nach Figur 3 stellt eine funktional völlig gleichwertige Variante dar. Beide Ausführungsformen eines zweipoligen Subsystems 10 sind aus der DE 101 03 031 A1 bekannt. Diese bekannten zweipoligen Subsysteme 10 weisen jeweils zwei abschaltbare Halbleiterschalter 1 und 3, jeweils zwei Dioden 2 und 4 und jeweils einen unipolaren Speicherkondensator 9 auf. Die beiden abschaltbaren Halbleiterschalter 1 und 3 sind elektrisch in Reihe geschaltet, wobei diese Reihenschaltung elektrisch parallel zum Speicherkondensator 9 geschaltet ist. Jedem abschaltbaren Halbleiterschalter 1 und 3 ist eine der beiden Dioden 2 und 4 derart elektrisch parallel geschaltet, dass diese zum korrespondierenden abschaltbaren Halbleiterschalter 1 oder 3 antiparallel geschaltet ist. Der unipolare Speicherkondensator 9 des Subsystems 10 besteht entweder aus einem Kondensator oder einer Kondensatorbatterie, die mehrere solcher Kondensatoren aufweist. Der Verbindungspunkt von Emitter des abschaltbaren Halbleiterschalters 1 und Anode der Diode 2 bildet eine Anschlussklemme X1 des Subsystems 10. Der Verbindungspunkt der beiden abschaltbaren Halbleiterschalter 1 und 3 und der beiden Dioden 2 und 4 bilden eine zweite Anschlussklemme X2 des Subsystems 10.

In der Ausführungsform des zweipoligen Subsystems 10 gemäß Figur 3 bildet dieser Verbindungspunkt die erste Anschlussklemme X1. Der Verbindungspunkt von Kollektor des abschaltbaren Halbleiterschalters 1 und Kathode der Diode 2 bilden die zweite Anschlussklemme X2 des Subsystems 10.

In beiden Ausführungsformen des zweipoligen Subsystems 10 gemäß der Figuren 2 und 3 werden als abschaltbare Halbleiterschalter 1 und 3 **I**nsulated **G**ate **B**ipolar **T**ransistoren (IGBT) verwendet. Ebenfalls können **MOS**-**F**eld**E**ffekt**T**ransistoren, auch als MOSFET bezeichnet, verwendet werden. Außerdem können **G**ate **T**urn **O**ff-Thyristoren, auch als GTO-Thyristoren bezeichnet, oder **I**ntegrated **G**ate **C**ommutated **T**hyristoren (IGCT) verwendet werden.

Gemäß der DE 101 03 031 A1 können die zweipoligen Subsysteme 10 eines jeden Phasenmoduls 100 des Stromrichters 102 nach der Figur 1 in einen Schaltzustand I, II und III gesteuert werden. Im Schaltzustand I ist der abschaltbare Halbleiterschalter 1 eingeschaltet und der abschaltbare Halbleiterschalter 3 ausgeschaltet. Dadurch ist eine an den Anschlussklemmen X1 und X2 anstehende Klemmenspannung $U_{X21}$ des zweipoligen Subsystems 10 gleich Null. Im Schaltzustand II sind der abschaltbare Halbleiterschalter 1 ausgeschaltet und der abschaltbare Halbleiterschalter 3 eingeschaltet. In diesem Schaltzustand II ist die anstehende Klemmenspannung $U_{X21}$ gleich der am Speicherkondensator 9 anstehenden Kondensatorspannung $U_C$. Im Schaltzustand III sind beide abschaltbare Halbleiterschalter 1 und 3 ausgeschaltet und die am Speicherkondensator 9 anstehende Kondensatorspannung $U_C$ ist konstant.

Damit dieser Stromrichter 102 mit verteilten Energiespeichern 9 gemäß Figur 1 redundant arbeiten kann, muss sichergestellt werden, dass ein fehlerhaftes Subsystem 10 an seinen Klemmen X1 und X2 dauerhaft kurzgeschlossen ist. Das heißt, dass die Klemmenspannung $U_{X21}$ des gestörten Subsystems 10 unabhängig von der Stromrichtung durch die Klemmen X1 und X2 Null ist.

Durch Ausfall eines der im Subsystem 10 vorhandenen abschaltbaren Halbleiterschalter 1 und 3 oder einer zugehörigen Ansteuerschaltung ist dieses Subsystem 10 in seiner ordnungsgemäßen Funktion gestört. Weitere mögliche Ursachen für Funktionsstörungen sind u.a. Fehler in der zugeordneten Ansteuerschaltung der Halbleiterschalter, deren Stromversorgung, Kommunikation und Messwerterfassung. Das heißt, das zweipolige Subsystem 10 kann nicht mehr wunschgemäß in einem der möglichen Schaltzustände I, II oder III gesteuert werden. Durch das Kurzschließen des Subsystems 10 an seinen Anschlüssen X1 und X2 wird diesem Subsystem 10 keine Energie mehr zugeführt. Dadurch werden Folgeschäden wie Überhitzung und Brand bei weiterem Betrieb des Stromrichters 102 sicher ausgeschlossen.

Eine derartige kurzschlussartige leitende Verbindung zwischen den Anschlussklemmen X1 und X2 eines gestörten zweipoligen Subsystems 10 muss zumindest den Betriebsstrom eines Ventilzweigs T1, ..., T6 des Phasenmoduls 100, in dem das gestörte zweipolige Subsystem 10 verschaltet ist, sicher und ohne Überhitzung führen. In der DE 10 2005 040 543 A1 ist angegeben, wie ein gestörtes Subsystem 10 sicher kurzgeschlossen werden kann, damit dieser bekannte Stromrichter 102 mit verteilten Energiespeichern 9 redundant weiterbetrieben werden kann.

Ein weiteres Verfahren zur Steuerung eines gestörten Subsystems in einem mehrphasigen Stromrichter ist aus der US 2006/279249 A1 bekannt.

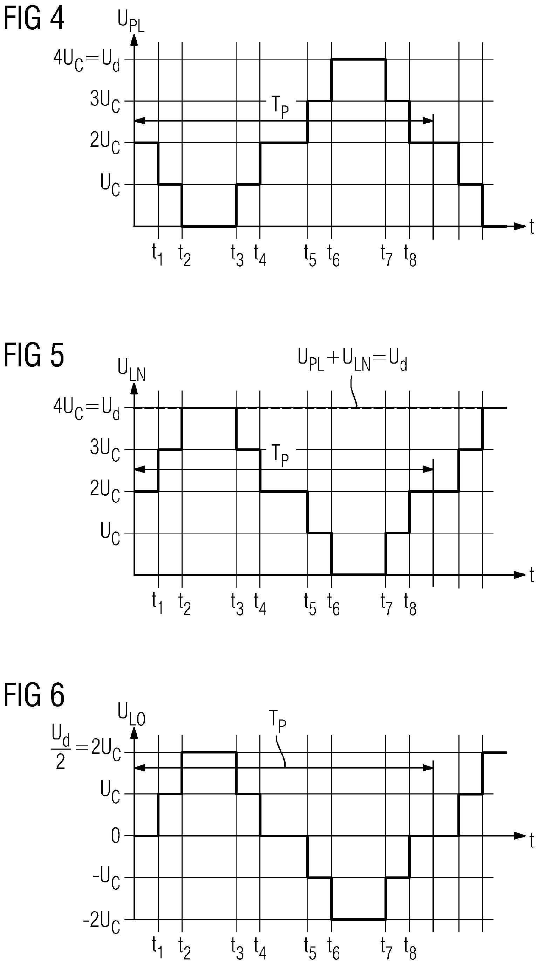

Für die folgende Erläuterung sei angenommen, dass die Speicherkondensatoren 9 aller zweipoligen Subsysteme 10 jeweils die gleiche Spannung $U_C$ aufweisen. Verfahren zur anfänglichen Herstellung dieses Zustands und dessen Beibehaltung im Betrieb sind ebenfalls aus der DE 101 03 031 A1 bekannt. In der Figur 4 ist in einem Diagramm über der Zeit t ein Verlauf der Potentialdifferenz $U_{PL}$ der Klemme P eines Phasenmoduls 100 gegen einen Lastanschluss L dargestellt. In der Figur 5 ist in einem Diagramm über der Zeit t ein Verlauf der Potentialdifferenz $U_{LN}$ des Lastanschlusses L gegen das Potential der Klemme N veranschaulicht. Gemäß diesen Potentialverläufen $U_{PL}$ und $U_{LN}$ werden zu den Zeitpunkten t1, ..., t8 von den acht zweipoligen Subsystemen 10 der Ventilzweige T1 und T2 jeweils ein Subsystem 10 zu- oder abgeschaltet. Ein Einschalten entspricht hierbei einem Übergang vom Schaltzustand I in den Schaltzustand II. Ein Abschalten entspricht einem Übergang vom Schaltzustand II in den Schaltzustand I. In diesen beiden Diagrammen ist jeweils eine Periode $T_P$ einer Grundschwingung des Potentialverlaufs $U_{L0}$ (Figur 6) des Lastanschlusses L gegenüber einem virtuellen Mittelpunkt O eines Phasenmoduls 100 des Stromrichters 102 mit verteilten Energiespeichern 9 der Potentialverläufe $U_{PL}$ und $U_{LN}$ dargestellt.

In der Figur 6 ist ein Verlauf einer Differenz der Potentialverläufe $U_{LN}$ und $U_{PL}$ gemäß den Figuren 4 und 5 in einem Diagramm über der Zeit t dargestellt. Dieser sich ergebende Potentialverlauf $U_{LO}$ liegt zwischen einem wechselspannungsseitigen Anschluss L1 bzw. L2 bzw. L3 eines Phasenmoduls 100 des Stromrichters 102 mit verteilten Energiespeichern 9 nach Figur 1 und eines virtuellen Mittelpunktes O, der bei einem Spannungszwischenkreis mit zwei Kondensatoren C1 und C2 vom Verbindungspunkt dieser beiden Kondensatoren C1 und C2 gebildet wird. Entsprechende Anteile von Oberschwingungen oder Gleichspannungskomponenten jeweils in den Ausgangsspannungen $U_{LXO}$ der Phasenmodule 100 des mehrphasigen Stromrichters 102 mit verteilten Energiespeichern 9 nach Figur 1 löschen sich für den Fall eines symmetrischen Drehspannungssystems in den Differenzspannungen jeweils zweier phasenverschobener Ausgangsspannungen $U_{L1O}$, $U_{L2O}$ oder $U_{L3O}$ aus. Diesen beiden Potentialverläufen $U_{PL}$ und $U_{LN}$ ist ebenfalls zu entnehmen, dass die Summe der Potentiale zu jedem Zeitpunkt $4 \cdot U_C$ ist. Das heißt, der Wert der Gleichspannung $U_d$ zwischen den Gleichspannungs-Sammelschienen $P_0$ und $N_0$ entspricht immer einer konstanten Anzahl von Subsystemen 10 im Schaltzustand II multipliziert mit dem Wert der am Kondensator 9 anstehenden Kondensatorspannung $U_C$. In dem beispielhaft dargestellten Fall entspricht diese Zahl der in den Ventilzweigen T1, ..., T6 vorhandenen Anzahl von zweipoligen Subsystemen 10 des Stromrichters 102 nach Figur 1.

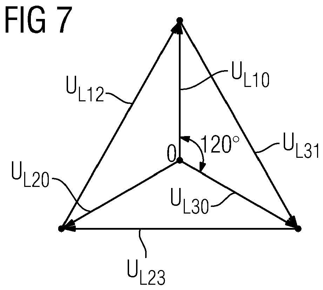

In der Figur 7 sind die Ausgangsspannungen $U_{L1O}$, $U_{L2O}$ und $U_{L3O}$ des Stromrichters 102 mit verteilten Energiespeichern 9 und die zugehörigen verketteten Spannungen $U_{L12}$, $U_{L23}$ und $U_{L32}$ zusammen dargestellt. In diesem ungestörten Fall bilden die Ausgangsspannungen $U_{L1O}$, $U_{L2O}$ und $U_{L3O}$ und deren verketteten Spannungen $U_{L12}$, $U_{L23}$ und $U_{L32}$ ein symmetrisches Drehspannungssystem. Das heißt, die Phasenverschiebung der Ausgangsspannungen $U_{L1O}$, $U_{L2O}$ und $U_{L3O}$ und deren verketteten Spannungen $U_{L12}$, $U_{L23}$ und $U_{L32}$ der drei Phasenmodule 100 des Stromrichters 102 mit verteilten Energiespeichern 9 sind zueinander 120°el..

Aus der DE 10 2005 045 091 A1 ist ein Verfahren zur Steuerung eines Stromrichters mit verteilten Energiespeichern gemäß Figur 1 bekannt, mit dem bei einem Störungsfall wenigstens eines Subsystems eines Phasenmoduls dieses Stromrichters die Symmetriebedingungen eingehalten werden. Gemäß diesem bekannten Verfahren wird zunächst ein Ventilzweig einer der drei Phasen ermittelt, indem ein oder mehrere zweipolige Subsysteme gestört sind. Jedes gestörte Subsystem wird derart angesteuert, dass die Klemmenspannung jeweils Null ist. In einem weiteren Ventilzweig des gestörten Phasenmoduls wird entsprechend der Anzahl der ermittelten zweipoligen Subsysteme eine dementsprechende Anzahl von Subsystemen derart angesteuert, dass die Klemmenspannung jeweils gleich einer Kondensatorspannung ist. Diese Steuerung von Subsystemen im gestörten Phasenmodul wird ebenfalls bei Subsystemen der Ventilzweige der ungestörten Phasenmodule ausgeführt.

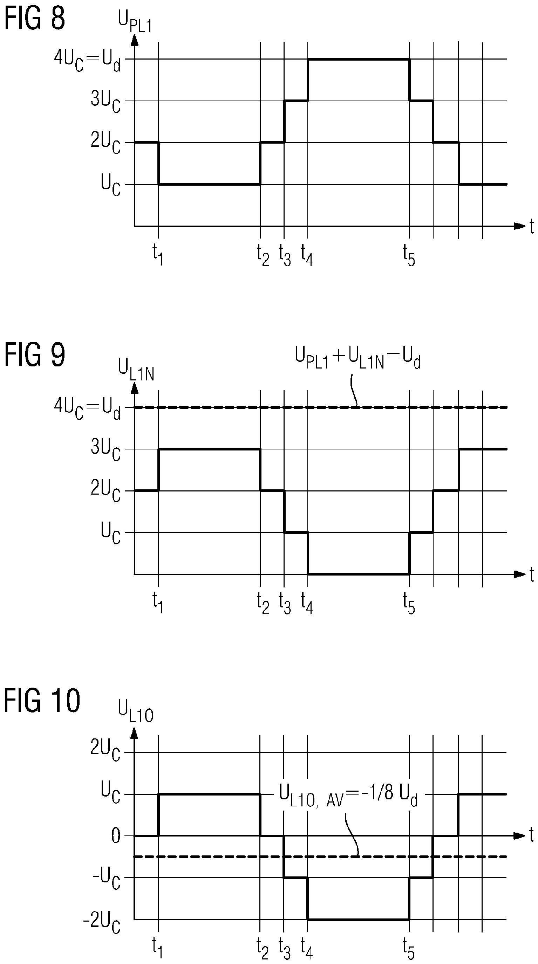

In der Figur 8 ist in einem Diagramm über der Zeit t ein Verlauf einer Potentialdifferenz $U_{PL1}$ der Klemme P eines Phasenmoduls 100 gegen einen Lastanschluss L1 dargestellt, wobei im unteren Ventilzweig T2 eines Phasenmoduls 100 ein zweipoliges Subsystem 10 gestört ist. In der Figur 9 ist in einem Diagramm über der Zeit t ein Verlauf einer Potentialdifferenz $U_{L1N}$ der Klemme L1 gegen das Potential der Klemme N dargestellt. Dem Verlauf der Potentialdifferenz $U_{PL1}$ gemäß Figur 8 ist zu entnehmen, dass ein Subsystem 10 des oberen Ventilzweigs T1 des Phasenmoduls 100 derart angesteuert wird, dass dessen Klemmenspannung $U_{X21}$ immer gleich der am Speicherkondensator 9 anstehenden Kondensatorspannung $U_C$ ist. Dadurch bleiben von den beispielhaft dargestellten vier Subsystemen 10 des oberen Ventilzweigs T1 nur drei Subsysteme 10 übrig, die zu- bzw. abgeschaltet werden können. Dem zeitlichen Verlauf der Potentialdifferenz $U_{L1N}$ des unteren Ventilzweigs T2 des Phasenmoduls 100 ist zu entnehmen, dass ein von den beispielhaft dargestellten vier Subsystemen 10 derart angesteuert ist, dass dessen Klemmenspannungen $U_{X21}$ immer gleich Null ist. Gemäß der Figur 1 weist von diesen unteren Ventilzweigen T2, T4 und T6 der drei Phasenmodule 100 der Ventilzweig T2 ein gestörtes zweipoliges Subsystem 10, gekennzeichnet durch eine Schraffur, auf. Dadurch kann der Wert der Amplitude der Spannung $U_{L1N}$ des Ventilzweigs T2 nur noch maximal $3 \cdot U_C$ sein. Durch dieses bekannte Verfahren ist die Anzahl der verwendeten Subsysteme 10 im gestörten Fall gleich der Anzahl der verwendeten Subsysteme 10 im ungestörten Fall. Der Verlauf der Amplitude der Summe der Potentialdifferenzen $U_{PL1}$ und $U_{L1N}$ ist in dem Diagramm der Figur 9 mittels einer unterbrochenen Linie veranschaulicht. Gegenüber einem ungestörten Fall weisen die Spannungen $U_{L1O}$, $U_{L2O}$ und $U_{L3O}$ im gestörten Fall jeweils eine geringere maximale Amplitude auf. Im dargestellten Beispiel weisen diese Spannungen $U_{L1O}$, $U_{L2O}$ und $U_{L3O}$ im ungestörten Fall eine maximale Spannungsamplitude von jeweils $1/2 \cdot U_d$ auf, wogegen im gestörten Fall eine maximale Amplitude nur noch $3/8 \cdot U_d$ ist. Das heißt, mittels dieses bekannten Verfahrens erhält man im gestörten Fall ein symmetrisches dreiphasiges Spannungssystem mit einer geringeren maximalen Amplitude.

In der Figur 10 ist über der Zeit t ein Verlauf der Differenz der Potentialdifferenzen $U_{PL1}$ und $U_{L1N}$ gemäß den Figuren 8 und 9 dargestellt. Diesem zeitlichen Verlauf des Potentials $U_{L1O}$ des Lastanschlusses L1 gegenüber einem virtuellen Mittelpunkt O ist zu entnehmen, dass dieser nicht mehr symmetrisch um eine Nulllage pendelt. Diese Nulllage ist um $1/8 \cdot U_d$ verschoben. Das heißt, dieser Potentialverlauf weist einen Gleichspannungsanteil auf.

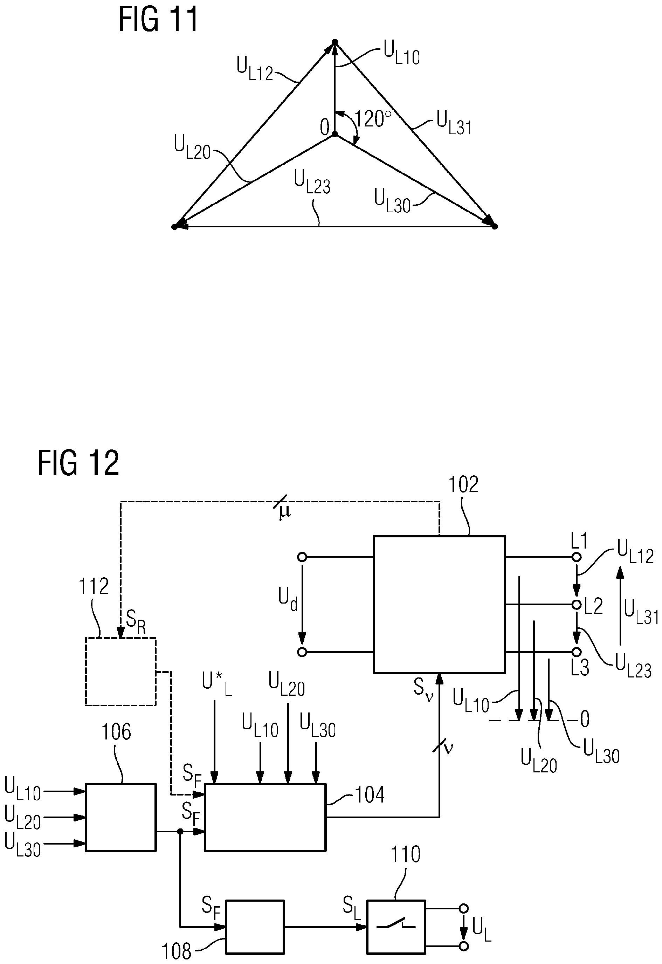

In der Figur 11 ist ein Zeigerdiagramm eines dreiphasigen Spannungssystems des Stromrichters 102 nach Figur 1 beim Auftreten eines gestörten Subsystems 10 dargestellt. Diesem Spannungssystem ist zu entnehmen, dass die Ausgangsspannungen $U_{L2O}$ und $U_{L3O}$ amplitudenmäßig sich gegenüber dem Spannungssystem gemäß Figur 7 nicht verändert haben. Da im Ventilzweig T2 ein Subsystem 10 (schraffiert) ausgefallen ist, verringert sich die Amplitude der Ausgangsspannung $U_{L10}$ dieses gestörten Phasenmoduls 100 betragsmäßig um den Betrag einer Kondensatorspannung $U_C$. Dadurch sind die verketteten Spannungen $U_{L12}$, $U_{L23}$ und $U_{L31}$ betragsmäßig nicht mehr gleich. Die beiden verketteten Spannungen $U_{L12}$ und $U_{L31}$ sind amplitudenmäßig gleich, aber gegenüber der verketteten Spannung $U_{L23}$ kleiner. Durch den Ausfall wenigstens eines Subsystems 10 eines Ventilzweigs T1, ..., T6 wird aus einem symmetrischen Spannungssystem verketteter Spannungen $U_{L12}$, $U_{L23}$, $U_{L31}$ ein unsymmetrisches Spannungssystem. Die auftretende Unsymmtrie hängt von der Anzahl ausgefallener Subsysteme 10 und von der Anzahl betroffener Ventilzweige T1, ..., T6 ab.

Der Erfindung liegt nun die Aufgabe zugrunde, ein Verfahren zur Steuerung eines dreiphasigen Stromrichters mit verteilten Energiespeichern anzugeben, mit dem beim Ausfall wenigstens eines Energiespeichers ein symmetrisches dreiphasiges Spannungssystem generiert werden kann.

Gemäß dem erfindungsgemäßen Verfahren wird zunächst die Anzahl ausgefallener Subsysteme und damit die gestörten Ventilzweige der Phasenmodule des Stromrichters mit verteilten Energiespeichern ermittelt. Anschließend werden die gestörten Subsysteme und die Subsysteme ungestörter Ventilzweige gestörter Phasenmodule derart angesteuert, dass deren Klemmenspannungen gleich Null sind. Dadurch sind alle gestörten Subsysteme und Subsysteme in den ungestörten Ventilzweigen gestörter Phasenmodule entsprechend der Anzahl der gestörten Subsysteme kurzgeschlossen. Dadurch weist die Ausgangsspannung eines gestörten Phasenmoduls eine verringerte Amplitude auf, die symmetrisch zu einer Nulllage verläuft. Das heißt, diese Ausgangsspannung ist gleichspannungsfrei. Durch den Ausfall wenigstens eines Subsystems in einem Ventilzweig eines Phasenmoduls wird aus einem an den Ausgangsklemmen des Stromrichters mit verteilten Energiespeichern anstehenden symmetrischen dreiphasigen Spannungssystem ein unsymmetrisches Spannungssystem.

Der Grundgedanke, der dieser Erfindung zugrunde liegt, ist der, dass die durch Ausfall wenigstens eines Subsystems verringerte Ausgangsspannung eines gestörten Phasenmoduls wieder auf seinen vorherigen Amplitudenwert gebracht werden muss. Dadurch wäre das unsymmetrische Spannungssystem wieder symmetrisch, wobei gleichzeitig die Amplituden dieses symmetrischen Spannungssystems maximal wären.

Es stellt sich dabei die Frage, wie mit einer verringerten Anzahl von Subsystemen eine Amplitude generiert werden kann, die einer Amplitude einer Ausgangsspannung eines Phasenmoduls im ungestörten Betrieb entsprechen sollte. Die Lösung besteht darin, dass die Energiespeicher der verbleibenden Subsysteme der Ventilzweige eines gestörten Phasenmoduls derart höher geladen werden, dass die Summe der erhöhten Kondensatorspannungen der Subsysteme eines Ventilzweigs eines gestörten Phasenmoduls gleich der Summe der Kondensatorspannungen der Subsysteme eines Ventilzweigs eines ungestörten Phasenmoduls ist. Je höher die Anzahl der Subsysteme pro Ventilzweig ist, umso geringer ist die Erhöhung an einer jeden Kondensatorspannung der verbleibenden Subsysteme eines Ventilzweigs eines gestörten Phasenmoduls bei Ausfall eines Subsystems.

Bei einem vorteilhaften Verfahren werden die verbleibenden Subsysteme eines gestörten Phasenmoduls nacheinander mit einer Energiequelle, welche mindestens die erhöhte Kondensatorspannung bereitstellt, für eine vorbestimmte Zeitspanne elektrisch leitend verbunden. Während dieser Zeitspanne fließt ein Strom aus der Energiequelle in das angeschlossene Subsystem, wodurch sein Energiespeicher nachgeladen wird. Erreicht eine am Energiespeicher anstehende Kondensatorspannung einen vorbestimmten Wert, so wird dieses Subsystem von der Energiequelle getrennt, die mit einem nächsten Subsystem eines gestörten Phasenmoduls verknüpft wird. Da eine derartige Spannungsquelle zur Vorladung der Energiespeicher der Subsysteme des Stromrichters mit verteilten Energiespeichern bei einem solchen Stromrichter bereits vorhanden ist, muss nicht einmal ein bestehender Stromrichter hardwaremäßig erweitert werden.

Bei einem weiteren vorteilhaften Verfahren wird ein zusätzlicher Ventilzweigstrom eingestellt, der nacheinander durch die verbleibenden Subsysteme eines gestörten Phasenmoduls für eine vorbestimmte Zeitspanne fließt. Auch dadurch werden die Kondensatorspannungen der verbleibenden Subsysteme eines gestörten Phasenmoduls erhöht.

Den Unteransprüchen 4 bis 6 ist zu entnehmen, wie ein derartiger zusätzlicher Ventilzweigstrom generiert wird. Das Verfahren zur Generierung von zusätzlichen Ventilzweigströmen mittels zusätzlicher Spannungszeitflächen ist aus der DE 10 2005 045 090 B4 bekannt.

Das erfindungsgemäße Verfahren ist somit in drei Abschnitte unterteilt, nämlich der Ermittlung ausgefallener Subsysteme und deren Kurzschließen, wobei auch Subsysteme entsprechend der Anzahl ausgefallener Subsysteme eines Ventilzweigs eines zum gestörten Ventilzweig korrespondierenden Ventilzweigs eines gestörten Phasenmoduls kurzgeschlossen werden. Dadurch ist die Ausgangsspannung des gestörten Phasenmoduls entsprechend der Anzahl ausgefallener Subsysteme verringert, aber frei von einem Gleichspannungsanteil. Im zweiten Abschnitt werden die Kondensatorspannungen der verbleibenden Subsysteme eines gestörten Phasenmoduls derart erhöht, dass die Summe dieser Kondensatorspannungen gleich der Summe der Kondensatorspannungen eines ungestörten Phasenmoduls ist. Ein dritter Abschnitt des erfindungsgemäßen Verfahrens befasst sich mit der Steuerung der Subsysteme der ungestörten Phasenmodule. Diese Steuerung unterscheidet sich nicht von der Steuerung der Subsysteme des Stromrichters mit verteilten Energiespeichern im störungsfreien Betrieb.

Zur weiteren Erläuterung der Erfindung wird auf die Zeichnung Bezug genommen, in der eine Ausführungsform eines erfindungsgemäßen Verfahrens zur Steuerung eines dreiphasigen Stromrichters mit verteilten Energiespeichern schematisch veranschaulicht ist.

FIG 1   zeigt ein Ersatzschaltbild eines bekannten Stromrichters mit verteilten Energiespeichern, in der

FIG 2   ist ein Ersatzschaltbild einer ersten Ausführungsform eines bekannten zweipoligen Subsystems des Stromrichters nach Figur 1 dargestellt, die

FIG 3   zeigt ein Ersatzschaltbild einer zweiten Ausführungsform eines bekannten zweipoligen Subsystems des Stromrichters nach Figur 1, in den

FIG 4 bis 6   sind Potentialverläufe eines Phasenmoduls eines Stromrichters nach Figur 1 im ungestörten Fall jeweils in einem Diagramm über der Zeit t dargestellt, in der

FIG 7   ist ein Zeigerdiagramm eines symmetrischen dreiphasigen Spannungssystems des Stromrichters nach Figur 1 im ungestörten Fall dargestellt, in den

FIG 8 bis 10   sind Potentialverläufe eines Phasenmoduls eines Stromrichters nach Figur 1 im gestörten Fall jeweils in einem Diagramm über der Zeit t dargestellt, in der

FIG 11   ist ein Zeigerdiagramm eines unsymmetrischen dreiphasigen Spannungssystems des Stromrichters gemäß Figur 1 im gestörten Fall dargestellt, die

FIG 12   zeigt ein Blockschaltbild einer erfindungsgemäßen Steuerung eines Stromrichters nach Figur 1 und in den

FIG 13 bis 15   sind Potentialverläufe eines gestörten Phasenmoduls des Stromrichters nach Figur 1 jeweils in einem Diagramm über der Zeit t dargestellt, die mittels des erfindungsgemäßen Verfahrens generiert sind.

Die Figur 12 zeigt ein Blockschaltbild einer Steuerung eines Stromrichters 102 mit verteilten Energiespeichern 9 gemäß Figur 1. In diesem Blockschaltbild sind mit 104 eine Einrichtung zur Erzeugung von Steuersignalen $S_v$, mit 106 eine Einrichtung zur Ermittlung gestörter Subsysteme 10, mit 108 eine Speichervorrichtung und mit 110 eine zuschaltbare Energiequelle niedriger Spannung bezeichnet. Die Einrichtung 104 ist ausgangsseitig mit Steueranschlüssen der Halbleiterschalter 1 und 3 der zweipoligen Subsysteme 10 der Ventilzweige T1 bis T6 des Stromrichters 102 elektrisch leitend verbunden. Die an den wechselspannungsseitigen Anschlüssen L1, L2 und L3, auch als Ausgangsklemmen des Stromrichters 102 bezeichnet, anstehenden Ausgangsspannungen $U_{L1O}$, $U_{L2O}$ und $U_{L3O}$ sind der Einrichtung 106 zur Ermittlung gestörter zweipoliger Subsysteme 10 zugeführt. Ausgangsseitig ist diese Einrichtung 106 einerseits mit einem Eingang der Einrichtung 104 zur Erzeugung von Steuersignalen $S_v$ und andererseits mit einem Eingang der Speichereinheit 108 verknüpft. Ausgangsseitig ist diese Speichervorrichtung 108 mit einer zuschaltbaren Energiequelle 110 verbunden. Der Einrichtung 104 zur Erzeugung von Steuersignalen $S_v$ sind die ermittelten Ausgangsspannungen $U_{L1O}$, $U_{L2O}$ und $U_{L3O}$ und eine Sollspannung $U_L^*$ zugeführt.

Es besteht eine weitere Möglichkeit, gestörte Subsysteme 10 in den Ventilzweigen T1, T2 bzw. T3, T4 bzw. T5, T6 eines jeden Phasenmoduls 100 des Stromrichters 102 mit verteilten Energiespeichern 9 zu ermitteln. Dazu wird eine Einrichtung 112 verwendet, die eingangsseitig mit jedem zweipoligen Subsystem 10 des Stromrichters 102 verknüpft ist. Jedes Subsystem 10 sendet an diese Einrichtung 112 ein Rückmeldesignal $S_R$, das anzeigt, ob das zugehörige Subsystem 10 ordnungsgemäß seinen Schaltzustand gewechselt hat oder nicht. Aus diesen $\mu = 6m$ Rückmeldesignalen $S_R$ wird ein Fehlersignal $S_F$ generiert, das der Einrichtung 104 zugeführt wird. Da es sich dabei um eine weitere Möglichkeit zur Ermittlung gestörter zweipoliger Subsysteme 10 handelt, ist diese in der Steuerung gemäß Figur 12 mittels einer unterbrochenen Linie dargestellt.

Wie bereits erwähnt, verringert sich eine Ausgangsspannung $U_{L10}$ bzw. $U_{L2O}$ bzw. $U_{L3O}$ des Stromrichters 102 mit verteilten Energiespeichern 9 gemäß Figur 1, sobald ein zweipoliges Subsystem 10 in einem Ventilzweig T1, ..., T6 einer der drei Phasenmodule 100 des Stromrichters 102 ausfällt. Der Wert der Amplitudenverringerung entspricht dabei dem Wert einer an dem Energiespeicher 9 anstehenden Kondensatorspannung $U_C$.

Es sei nun angenommen, dass ein zweipoliges Subsystem 10 des Ventilzweigs T2 des Phasenmoduls 100 des Stromrichters 102 mit verteilten Energiespeichern 9 gemäß Figur 1 wegen irgendeiner Störung sicher kurzgeschlossen ist. Dieses gestörte Subsystem 10 ist im Ersatzschaltbild des Stromrichters 102 gemäß Figur 1 mittels einer Schraffur kenntlich gemacht.

Gemäß dem erfindungsgemäßen Verfahren wird zunächst die Anzahl gestörter Subsysteme 10 ermittelt. Da angenommen ist, dass nur ein Subsystem 10 gestört ist, wird als Anzahl "1" ermittelt. Außerdem wird der Ventilzweig T1, ..., T6 ermittelt, in dem das gestörte Subsystem 10 angeordnet ist. Im angenommenen Fall handelt es sich um den Ventilzweig T2. Das gestörte Subsystem 10 des Ventilzweigs T2 und ein Subsystem 10 des zum gestörten Ventilzweig T2 korrespondierenden ungestörten Ventilzweigs T1 des gestörten Phasenmoduls 100 werden derart angesteuert, dass deren Klemmenspannungen $U_{X21}$ jeweils Null sind. Sind mehrere Subsysteme 10 eines Ventilzweigs T1, ..., T6 oder mehrere Ventilzweige T1, ..., T6 gestört, so werden entsprechend der Anzahl gestörter Subsysteme 10 in den zu den gestörten Ventilzweigen T1, ..., T6 korrespondierenden Ventilzweigen T1, ..., T6 gestörter Phasenmodule 100 derart angesteuert, dass auch die Klemmenspannungen $U_{X21}$ dieser Subsysteme 10 jeweils Null sind. Das heißt, dass 2n Subsysteme 10 mit n = Anzahl der gestörten Subsysteme 10, kurzgeschlossen werden.

Mit der Anzahl der gestörten Subsysteme 10 und der Kenntnis der gestörten Ventilzweige ist man in der Lage, den Spannungseinbruch jeweils an einem Ausgang L1, L2 oder L3 der Phasenmodule des Stromrichters 102 mit verteilten Energiespeichern 9 bestimmen zu können. Die Anzahl der verwendeten Subsysteme 10 pro Ventilzweig T1, ..., T6 und die jeweils am Speicherkondensator 9 eines jeden Subsystems 10 anstehende Kondensatorspannung $U_C$ ist bekannt, so dass die Amplitude einer jeden an den Ausgangsklemmen L1, L2 und L3 anstehende Spannung $U_{L1O}$, $U_{L2O}$ und $U_{L3O}$ bekannt ist. Diese Amplitude ist gleich $mU_C/2$, wobei m die Anzahl der verwendeten Subsysteme 10 pro Ventilzweig T1, ..., T6 ist. Je höher die Anzahl m der verwendeten Subsysteme 10 ist, umso geringer ist der Amplitudeneinbruch bei Ausfall eines Subsystems 10 in einem Ventilzweig T1, ..., T6.

Erfindungsgemäß soll nun dieser Spannungseinbruch in einem gestörten Phasenmodul 100 durch Erhöhung der Kondensatorspannungen $U_C$ der Subsysteme 10 des gestörten Phasenmoduls 100 kompensiert werden. Dazu werden die Energiespeicher 9 dieser Subsysteme 10 derart weiter aufgeladen, dass die Summe der erhöhten Kondensatorspannungen $U_C^*$ gleich der Summe der Kondensatorspannungen $U_C$ eines Ventilzweigs T3, T4 bzw. T5, T6 eines ungestörten Phasenmoduls 100 ist. Für diese erhöhte Kondensatorspannung $U_C^*$ gilt:

$$U_C^* \;=\; U_C \;+\; \Delta U \quad \text{mit } \Delta U = U_C/m\text{-}n.$$

Beim angenommenen Fall heißt das, dass folgendes:

$$\Sigma U_C^* \;=\; 4/3 \; U_C$$

gelten muss. Daraus folgt, dass die Kondensatorspannungen $U_C$ der Energiespeicher 9 der noch drei vorhandenen Subsysteme 10 der beiden Ventilzweige T1 und T2 des gestörten Phasenmoduls 100 um ein Drittel seines Wertes erhöht werden müssen. Werden anstelle von vier Subsystemen 10 pro Ventilzweig T1, ..., T6 acht Subsysteme 10 verwendet, so müssen die Kondensatorspannungen $U_C^*$ der Subsysteme 10 eines jeden Ventilzweigs T1 und T2 eines gestörten Phasenmoduls 100 gemäß der angegebenen Gleichung für eine erhöhte Kondensatorspannung $U_C^*$ jeweils nur um 1/7 seines Wertes erhöht werden.

Mit der Erhöhung der Kondensatorspannung $U_C$ auf den Wert $\overset{*}{U}_C$ am Energiespeicher 9 eines jeden Subsystems 10 eines gestörten Phasenmoduls 100 steigt ebenfalls jeweils die Spannungsbelastung der beiden Halbleiterschalter 1 und 3 und der beiden Dioden 2 und 4 an. Damit diese Halbleiter 1 bis 4 eines jeden Subsystems 10 eines gestörten Phasenmoduls 100 diese Spannungsbelastung aushalten, sollte die Anzahl m der verwendeten Subsysteme 10 eines jeden Ventilzweigs T1, ..., T6 des Stromrichters 102 mit verteilten Energiespeichern 9 möglichst hoch, beispielsweise acht, insbesondere zwölf, sein. Je höher die Anzahl m der verwendeten Subsysteme 10 eines jeden Ventilzweigs T1, ..., T6 des Stromrichters 102 mit verteilten Energiespeichern 9 ist, umso geringer fällt die Erhöhung der Kondensatorspannung $U_C$ der verbleibenden Subsysteme 10 eines gestörten Phasenmoduls 100 aus bzw. umso mehr ausgefallene Subsysteme 10 eines Ventilzweigs T1, ..., T6 eines Phasenmoduls 100 können durch Erhöhung der Kondensatorspannungen $U_C$ der verbleibenden Subsysteme 10 der beiden Ventilzweige T1, T2 bzw. T3, T4 bzw. T5, T6 eines gestörten Phasenmoduls 100 kompensiert werden.

Um welchen Anteil $\Delta U$ die Kondensatorspannungen $U_C$ der Subsysteme 10 der Ventilzweige T1 und T2 des gestörten Phasenmoduls 100 jeweils erhöht werden müssen, wird in Abhängigkeit der ermittelten Anzahl ausgefallener Subsysteme 10 aus der Speichervorrichtung 108 aufgerufen. Am Ausgang dieser Speichervorrichtung 108 steht ein Signal $S_L$ an, mit dem die zuschaltbare Energiequelle 110 derart an die Klemmen X1 und X2 der Subsysteme 10 des gestörten Phasenmoduls 100 geschaltet werden, dass deren Kondensatorspannungen $U_C$ um einen vorbestimmten Wert $\Delta U$ erhöht werden. Um dies zu erreichen, kann jedes noch vorhandene ungestörte Subsystem 10 der beiden Ventilzweige T1 und T2 des gestörten Phasenmoduls 100 zwecks Nachladung folgendermaßen gesteuert werden: Von den (2m-2n) noch vorhandenen Subsystemen (m = Anzahl der Subsysteme 10 pro Ventilzweig; n = Anzahl der gestörten Subsysteme pro Ventilzweig) des Stromrichters 102 werden (2m-2n-1) Subsysteme 10 in den Schaltzustand I und das jeweils verbleibende nicht gestörte Subsystem 10 in den Schaltzustand II oder III gesteuert. Zyklisch nacheinander wird jeweils ein nächstes ungestörtes Subsystem 10 des gestörten Phasenmoduls 100 in den Schaltzustand II und das vorhergehende zurück in den Schaltzustand I gesteuert. Die Energiequelle 110, welche die erhöhte Kondensatorspannung $\overset{*}{U}_C$ bereitstellt, wird auch beim Vorladen der Energiespeicher 9 der Subsysteme 10 des Stromrichters 102 benötigt. Das heißt, dass diese Energiequelle 110 bereits Bestandteil dieses Stromrichters 102 mit verteilten Energiespeichern 9 ist. In der bereits eingangs genannten DE 101 03 031 A1 ist eine derartige Vorladung beschrieben.

Die Kondensatorspannungen $U_C$ der Energiespeicher 9 der Subsysteme 10 der beiden Ventilzweige T1 und T2 des gestörten Phasenmoduls 100 können auch mit Hilfe eines zusätzlichen Ventilzweigstromes erhöht werden. Um einen zusätzlichen Ventilzweigstrom zu generieren, müssen gemäß der DE 102005045090 B4 zusätzliche Spannungszeitflächen in den Ventilzweigspannungen eines Phasenmoduls erzeugt werden. Derartige Spannungszeitflächen können dadurch eingeprägt werden, dass die Schalthandlungen der beiden Ventilzweige eines Phasenmoduls nicht mehr zeitsynchron, sondern mit einer frei wählbaren zeitlichen Zeitspanne ausgeführt werden. Das heißt, dass die Schalthandlungen eines oberen Ventilzweiges, beispielsweise T1, eines Phasenmoduls 100 gegenüber den Schalthandlungen eines unteren Ventilzweigs T2 dieses Phasenmoduls 100 verzögert und/oder vorgezogen ausgeführt werden. Durch diese Modifikation der Schalthandlungen der beiden Ventilzweige T1, T2 des gestörten Phasenmoduls 100 wird eine vorbestimmte zusätzliche Spannungszeitfläche dynamisch eingestellt. Um nicht den überwiegenden Teil dieser Patentschrift zu wiederholen, wird zur näheren Erläuterung der Generierung zusätzlicher Spannungszeitflächen auf diese Patentschrift verwiesen.

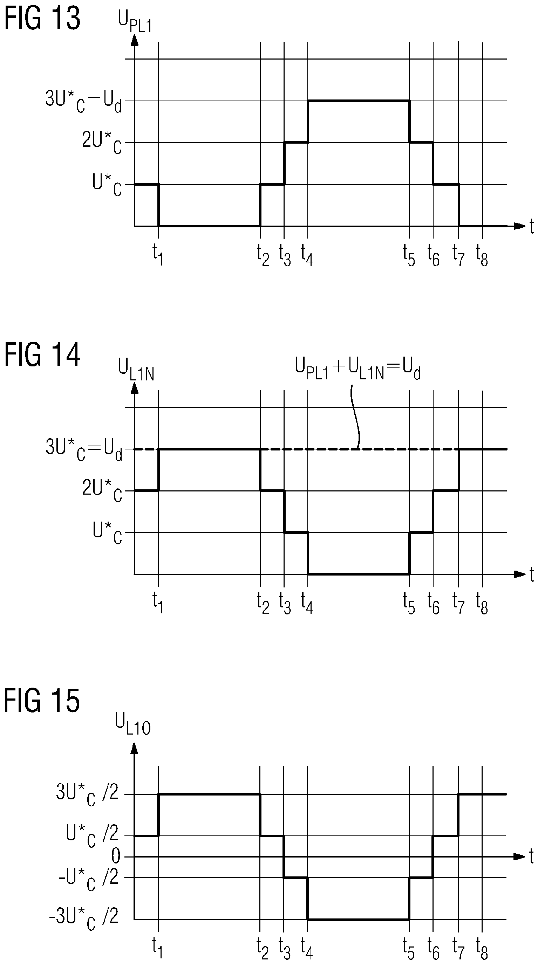

In den Figuren 13 und 14 sind jeweils Potentialverläufe $U_{PL1}$ und $U_{L1N}$ der Ventilzweige T1 und T2 des gestörten Phasenmoduls 100 jeweils in einem Diagramm über der Zeit t dargestellt. Der Verlauf im Diagramm gemäß Figur 14 entspricht genau dem qualitativen Potentialverlauf im Diagramm der Figur 9. Gemäß dem erfindungsgemäßen Verfahren wird ebenfalls ein Subsystem 10 im zum gestörten Ventilzweig T2 korrespondierenden ungestörten Ventilzweig T1 des gestörten Phasenmoduls 100 derart angesteuert, dass dessen Klemmenspannung $U_{X21}$ Null ist. Deshalb entspricht der Potentialverlauf $U_{PL1}$ im Diagramm der Figur 13 dem qualitativen Potentialverlauf $U_{L1N}$ im Diagramm der Figur 14, die zueinander gegenläufig sind. Ein am Ausgang L1 des gestörten Phasenmoduls 100 des Stromrichters 102 mit verteilten Energiespeichern 9 anstehender Potentialverlauf $U_{L1O}$ ist in der Figur 15 in einem Diagramm über der Zeit t dargestellt. Ohne den zweiten Teil des erfindungsgemäßen Verfahrens, nämlich die Erhöhung der Kondensatorspannungen $U_C$ um $\Delta U$ der noch vorhandenen Subsysteme 10, beträgt der Scheitelwert der Ausgangsspannung $U_{L1O}$ 3/2 gegenüber $2U_C$ der Ausgangsspannung $U_{L2O}$ bzw. $U_{L3O}$ eines ungestörten Phasenmoduls 100. Diese Amplitudendifferenz wird mittels der Erhöhung der Kondensatorspannungen $U_C$ um $\Delta U$ der noch vorhandenen Subsysteme 10 der beiden Ventilzweige T1, T2 des gestörten Phasenmoduls 100 kompensiert. Mit dieser Erhöhung der Kondensatorspannungen $U_C$ um $\Delta U$ wird das unsymmetrische Zeigerdiagramm gemäß Figur 11 wieder in das symmetrische Zeigerdiagramm gemäß Figur 7 überführt.

Mit diesem erfindungsgemäßen Verfahren ist sogar ein redundanter weiterer Betrieb des Stromrichters 102 mit verteilten Energiespeichern 9 bei einem so genannten Doppelfehler möglich. Bei einem Doppelfehler handelt es sich um einen Störfall, bei dem zwei Subsysteme 10 in nicht korrespondierenden Ventilzweigen zweier Phasenmodule 100, beispielsweise Ventilzweig T1 und T4, ausgefallen sind. Um die Spannungsbeanspruchung der Halbleiter 1 bis 4 eines jeden Subsystems 10 des Stromrichters 102 mit verteilten Energiespeichern 9 in Grenzen zu halten, sollte die Anzahl m der Subsysteme 10 so groß wie möglich gewählt werden, wobei m=12 pro Ventilzweig T1, ..., T6 schon ausreichen könnte.

**Patentansprüche**

1. Verfahren zur Steuerung eines Stromrichters (102) mit verteilten Energiespeichern (9) mit drei Phasenmodulen (100), die jeweils einen Brückenzweig des Stromrichters (102) bilden und jeweils eine Reihenschaltung aus einem ersten und einem zweiten Ventilzweig (T1, T3, T5; T2, T4, T6) aufweisen, die jeweils mit wenigstens drei elektrisch in Reihe geschalteten zweipoligen Subsystemen (10) versehen sind, wobei die drei Phasenmodule (100) gleichspannungsseitig mit einer positiven und einer negativen Gleichspannungssammelschiene verbunden sind, wobei ein Verknüpfungspunkt, insbesondere ein Verbindungspunkt, des ersten und zweiten Ventilzweiges (T1, T3, T5; T2, T4, T6) des jeweiligen Phasenmoduls (100) einen wechselspannungsseitigen Anschluss (L1,L2,L3) des Phasenmoduls 100 bildet, wobei die Subsysteme (10) jeweils einen Kondensator (9) aufweisen, bei Ausfall wenigstens eines Subsystems (10) mit folgenden Verfahrensschritten:

   a) Ermittlung der Anzahl (n) ausgefallener Subsysteme (10),
   b) Ermittlung der Ventilzweige (T1, ..., T6), in denen wenigstens ein Subsystem (10) ausgefallen ist,
   c) Ansteuerung eines jeden ausgefallenen Subsystems (10) derart, dass deren Klemmenspannungen ($U_{X21}$) Null sind,
   d) Ermittlung von zu gestörten Ventilzweigen (T1, ..., T6) korrespondierenden ungestörten Ventilzweigen (T1, ..., T6) eines jeden gestörten Phasenmoduls (100),
   e) Ansteuerung einer Anzahl von Subsystemen (10) in jeweils einem ungestörten Ventilzweig (T1, ..., T6) eines jeden gestörten Phasenmoduls (100) derart, dass deren Klemmenspannungen ($U_{X21}$) Null sind,
   f) Erhöhung der Spannungen (Uc) des Kondensators (9) der Subsysteme (10) eines jeden gestörten Phasenmoduls (100), bei denen die Klemmenspannungen ($U_{X21}$) ungleich dauerhaft Null sind, derart, dass die Summe der erhöhten Spannungen $\left( U_{C}^{*} \right)$ der Kondensatoren (9) der Subsysteme (10) jeweils eines Ventilzweigs (T1, ..., T6) eines gestörten Phasenmoduls (100) gleich der Summe der Spannungen (Uc) der Kondensatoren (9) der Subsysteme (10) jeweils eines Ventilzweigs eines ungestörten Phasenmoduls (100) ist, und
   g) Steuerung der Subsysteme (10) der Ventilzweige (T1, ..., T6) der ungestörten Phasenmodule (100) entsprechend vor dem Ausfall wenigstens eines Subsystems (10).

2. Verfahren nach Anspruch 1,
   wobei die Subsysteme (10) gestörter Phasenmodule (100), deren Klemmenspannungen ($U_{X21}$) ungleich dauerhaft Null sind, nacheinander mit einer Energiequelle (110), welche die erhöhte Spannung $\left( U_{C}^{*} \right)$ des Kondensators (9) bereitstellt, für eine vorbestimmte Zeitspanne elektrisch leitend verbunden werden.

3. Verfahren nach Anspruch 1,
   wobei ein vorbestimmter zusätzlicher Ventilzweigstrom eingestellt wird, der nacheinander für eine vorbestimmte Zeitspanne durch jedes Subsystem (10) eines jeden gestörten Phasenmoduls (100) fließt, deren Klemmenspannungen ($U_{X21}$) ungleich dauerhaft Null sind.

4. Verfahren nach Anspruch 3,
   wobei zur Generierung jeweils eines zusätzlichen Ventilzweigstroms eine zusätzliche Spannungszeitfläche in den Ventilzweigspannungen eines jeden gestörten Phasenmoduls (100) verwendet wird.

5. Verfahren nach Anspruch 4,
   wobei zusätzliche Spannungszeitflächen derart eingeprägt werden, dass Schalthandlungen im ersten und zweiten Ventilzweig (T1, T2 bzw. T3, T4 bzw. T5, T6) eines jeden gestörten Phasenmoduls (100) mit einer vorbestimmten zeitlichen Zeitspanne ausgeführt werden.

6. Verfahren nach Anspruch 4,
   wobei zusätzliche Spannungszeitflächen derart eingeprägt werden, dass zu den zeitsynchron ausgeführten Schalthandlungen der Ventilzweige (T1, T2 bzw. T3, T4 bzw. T5, T6) eines jeden gestörten Phasenmoduls (100) weitere Schalthandlungen vorgesehen sind.

## Claims

1. Method for controlling a converter (102) with distributed energy stores (9) having three phase modules (100) which each form a bridge arm of the converter (102) and each have a series circuit consisting of a first and a second valve arm (T1, T3, T5; T2, T4, T6), which are each provided with at least three two-pole subsystems (10), which are electrically connected in series, wherein, on the DC voltage side, the three phase modules (100) are connected to a positive and a negative DC voltage busbar, wherein a junction point, in particular a connection point, between the first and second valve arms (T1, T3, T5; T2, T4, T6) of the respective phase module (100) forms a connection (L1, L2, L3) on the AC voltage side of the phase module 100, wherein the subsystems (10) each have a capacitor (9), with the following method steps in the event of failure of at least one subsystem (10):

    a) determination of the number (n) of failed subsystems (1),
    b) determination of the valve arms (T1, ..., T6) in which at least one subsystem (10) has failed,
    c) control of each failed subsystem (10) such that its terminal voltages ($U_{X21}$) are zero,
    d) determination of sound valve arms (T1, ..., T6) which correspond to faulty valve arms (T1, ..., T6) in each faulty phase module (100),
    e) control of a number of subsystems (10) in in each case one sound valve arm (T1, ..., T6) in each faulty phase module (100) such that their terminal voltages ($U_{X21}$) are zero,
    f) increasing the voltages ($U_C$) of the capacitor (9) in the subsystems (10) of each faulty phase module (100) in which the terminal voltages ($U_{X21}$) are not permanently equal to zero, such that the sum of the increased voltages ($U^*_C$) of the capacitors (9) of the subsystems (10) have in each case one valve arm (T1, ..., T6) of a faulty phase module (100) is equal to the sum of the voltages ($U_C$) of the capacitors (9) of the subsystems (10) of in each case one valve arm in a sound phase module (100), and
    g) control of the subsystems (10) of the valve arms (T1, ..., T6) of the sound phase modules (100) corresponding to the control before the failure of at least one subsystem (10).

2. Method according to Claim 1,
wherein the subsystems (10) of faulty phase modules (100) whose terminal voltages ($U_{X21}$) are not permanently equal to zero are successively electrically conductively connected for a predetermined time interval to a power source (110) which provides the increased voltage ($U^*_C$) of the capacitor (9).

3. Method according to Claim 1,
wherein a predetermined additional valve arm current is set, which flows successively for a predetermined time interval through each subsystem (10) of each faulty phase module (100), whose terminal voltages ($U_{X21}$) are not permanently equal to zero.

4. Method according to Claim 3,
wherein an additional voltage/time integral in the valve arm voltages of each faulty phase module (100) is used in each case to generate an additional valve arm current.

5. Method according to Claim 4,
wherein additional voltage/time integrals are applied such that switching operations are carried out with a predetermined time interval in the first and second valve arms (T1, T2; T3, T4 and T5, T6) of each faulty phase module (100).

6. Method according to Claim 4,
wherein additional voltage/time integrals are applied such that further switching operations are provided, in addition to the switching operations, which are carried out synchronized in time, in the valve arms (T1, T2; T3, T4 and T5, T6) of each faulty phase module (100).

## Revendications

1. Procédé de commande d'un convertisseur (102) à accumulateurs (9) d'énergie répartis, comprenant trois modules (100) de phase, qui forment chacun une branche de pont du convertisseur (102) et ont chacun un circuit série composé d'une première et d'une deuxième branches (T1, T3, T5; T2, T4, T6) de soupape, qui sont pourvues chacune d'au moins trois sous-systèmes (10) bipolaires montés en série électriquement, les trois modules (100) de phase étant connectés, du côté de la tension continue, à une barre collectrice de tension continue positive et à une barre collectrice de tension continue négative, un point de liaison, notamment un point de liaison de la première et de la deuxième branches (T1, T3, T5; T2, T4, T6) de soupape du module (100) de phase respectif, formant une borne (L1, L2, L3), du côté de la tension alternative, du module (100) de phase, les sous-systèmes (10) ayant chacun un condensateur (9), lors d'une défaillance d'au moins un sous-système (10), comprenant les stades de procédé suivants :

a) détermination du nombre (n) de sous-systèmes (10) défaillants,

b) détermination des branches (T1, ..., T6) de soupape, dans lesquelles au moins un sous-système (10) est défaillant,

c) commande de chaque sous-système (10) défaillant, de manière à ce que leurs tensions ($U_{x21}$) aux bornes soient nulles,

d) détermination de branches (T1, ..., T6) de soupape non perturbées correspondant à des branches (T1, ..., T6) de soupape perturbées, de chaque module (100) de phase perturbé,

e) commande d'un nombre de sous-systèmes (10) dans respectivement une branche (T1, ..., T6) de soupape non perturbée de chaque module (100) de phase perturbé, de manière à ce que leurs tensions ($U_{x21}$) aux bornes soient nulles,

f) élévation des tensions ($U_c$) du condensateur (9) des sous-systèmes (10) de chaque module (100) de phase perturbé, dans lesquelles les tensions ($U_{x21}$) aux bornes sont différentes de zéro, d'une manière durable, de manière à ce que la somme des tensions ($U_C^*$) élevées des condensateurs (9) des sous-systèmes (10), respectivement d'une branche (T1, ..., T6) de soupape d'un module (100) de phase perturbée, soit égale à la somme des tensions ($U_c$) des condensateurs (9) des sous-systèmes (10), respectivement d'une branche de soupape d'un module (100) de phase non perturbé, et

g) commande des sous-systèmes (10) des branches (T1, ..., T6) de soupape des modules (100) de phase non perturbés correspondants, avant la défaillance d'au moins un sous-système (10).

2.  Procédé suivant la revendication 1,
    dans lequel on relie, d'une manière conductrice de l'électricité, pendant un laps de temps déterminé à l'avance, les sous-systèmes (10) de modules (100) de phase perturbés, dont les tensions ($U_{x21}$) aux bornes sont différentes de zéro d'une manière durable, l'une après l'autre, à une source (110) d'énergie, qui procure la tension ($U_C^*$) élevée du condensateur (9).

3.  Procédé suivant la revendication 1,
    dans lequel on établit un courant de branche de soupape supplémentaire déterminé à l'avance, qui passe, l'un après l'autre, pendant un laps de temps déterminé à l'avance, dans chaque sous-système (10) de chaque module (100) de phase perturbé, dont les tensions ($U_{x21}$) sont différentes de zéro de manière durable.

4.  Procédé suivant la revendication 3,
    dans lequel, pour créer respectivement un courant de branche de soupape supplémentaire, on utilise une surface supplémentaire de temps de tension dans les tensions de branche de soupape de chaque module (100) de phase perturbé.

5.  Procédé suivant la revendication 4,
    dans lequel on imprime des surfaces de temps de tension supplémentaires, de manière à exécuter des manipulations de coupure dans la première et dans la deuxième branches (T1, T2 ou T3, T4 ou T5, T6) de soupape de chaque module (100) de phase perturbé avec un laps de temps déterminé à l'avance.

6.  Procédé suivant la revendication 4,
    dans lequel on imprime des surfaces de temps de tension supplémentaires, de manière à prévoir, par rapport aux manipulations de coupure exécutées en synchronisme dans le temps des branches (T1, T2 ou T3, T4 ou T5, T6) de soupape de chaque module (100) de phase perturbé, d'autres manipulations de coupure.

# FIG 1

FIG 2

FIG 3

FIG 4

FIG 5

FIG 6

FIG 7

FIG 8

FIG 9

FIG 10

## FIG 11

## FIG 12

FIG 13

$U_{PL1}$

$3U^*_C = U_d$

$2U^*_C$

$U^*_C$

t

$t_1$    $t_2$ $t_3$ $t_4$    $t_5$ $t_6$ $t_7$ $t_8$

FIG 14

$U_{L1N}$    $U_{PL1} + U_{L1N} = U_d$

$3U^*_C = U_d$

$2U^*_C$

$U^*_C$

t

$t_1$    $t_2$ $t_3$ $t_4$    $t_5$ $t_6$ $t_7$ $t_8$

FIG 15

$U_{L10}$

$3U^*_C / 2$

$U^*_C / 2$

0

$-U^*_C / 2$

$-3U^*_C / 2$

t

$t_1$    $t_2$ $t_3$ $t_4$    $t_5$ $t_6$ $t_7$ $t_8$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103031 A1
- DE 102005040543 A1
- US 20060279249 A1
- DE 102005045091 A1
- DE 102005045090 B4